# EUROPÄISCHE PATENTSCHRIFT

(11) **EP 2 220 406 B1**
(45) Veröffentlichungstag und Bekanntmachung des Hinweises auf die Patenterteilung: **17.08.2016**
(21) Anmeldenummer: 08862604.9
(22) Anmeldetag: 10.12.2008
(51) Int. Cl.: F16J 1/16

(54) **BOLZENNABE SOWIE DAMIT VERSEHENER KOLBEN FÜR EINEN VERBRENNUNGSMOTOR**
PIN BOSS AND PISTON HAVING THE SAME, FOR AN INTERNAL COMBUSTION ENGINE
BOSSAGE D'AXE ET PISTON DE MOTEUR A COMBUSTION INTERNE EN ETANT DOTE

(30) Priorität: 14.12.2007 DE 102007060473
(43) Veröffentlichungstag der Anmeldung: 25.08.2010
(73) Patentinhaber: Mahle International GmbH, 70376 Stuttgart (DE)
(72) Erfinder: ISSLER, Wolfgang, 71409 Schwaikheim (DE)
(74) Vertreter: Stumkat, Ulrich
(86) Internationale Anmeldenummer: PCT/DE2008/002075
(87) Internationale Veröffentlichungsnummer: WO 2009/076938

(56) Entgegenhaltungen:
- DE-A-102004 008 097

## Beschreibung

Die vorliegende Erfindung betrifft eine Bolzennabe für einen Kolben für einen Verbrennungsmotor, wobei die Bolzennabe mit einer Nabeninnenfläche und einer Nabenaußenfläche sowie mit einer Nabenbohrung zur Aufnahme eines Kolbenbolzens versehen ist. Die vorliegende Erfindung betrifft ferner einen Kolben für einen Verbrennungsmotor, der mit derartigen Bolzennaben versehen ist.

Bei der Gestaltung von Bolzennaben ist zu beachten, dass im Betrieb die auf den Kolbenboden einwirkenden Gaskräfte über die Bolzennaben auf den Kolbenbolzen übertragen werden. Dabei treten zum Teil erhebliche Spannungen auf, die bspw. in der Bolzennabe zur Rissbildung beitragen können. Durch die Gaskräfte erzeugten Spannungen am Kolbenboden können insbesondere bei Kolben mit geringer Kompressionshöhe, die in Ottomotoren verwendet werden, das erträgliche Maß überschreiten. Um diese Spannungen zu verringern, wurde vorgeschlagen, in Richtung des Kolbenbodens eine Hochovalität in die Nabenbohrung einzubringen, wie es bspw. in der DE 10 2004 008 097 A1 offenbart ist. Damit geht aber, insbesondere im Vergleich zu mit einer Querovalität versehenen Bolzennaben, eine Verringerung der Nabenfestigkeit einher. Außerdem hat sich herausgestellt, dass einseitig mit einer Hochovalität versehene Bolzennaben unerwünschte Geräusche verursachen können, die von der Bewegung des Kolbenbolzens herrühren.

Der vorliegenden Erfindung liegt somit die Aufgabe zugrunde, eine gattungsgemäße Bolzennabe so weiterzuentwickeln, dass bei verbesserter Nabenfestigkeit sowohl die Spannungen im Bereich des Kolbenbodens reduziert sind als auch unerwünschte Geräusche vermieden werden und die Festigkeit in der Bolzennabe nicht wesentlich verschlechtert wird.

Zur Lösung dieser Aufgabe werden eine Bolzennabe mit den Merkmalen des Patentanspruchs 1 sowie ein mit derartigen Bolzennaben versehener Kolben vorgeschlagen. Erfindungsgemäß ist vorgesehen, dass die Nabenbohrung im Nabenzenit eine Tasche aufweist, deren Tiefe entlang der Nabenkontur in Richtung der Nabenaußenfläche stetig abnimmt.

Für den Fachmann überraschend hat sich herausgestellt, dass mit der erfindungsgemäßen Ausbildung der Nabenbohrung die Festigkeit der erfindungsgemäßen Bolzennabe deutlich erhöht wird und zugleich die Bodenspannungen signifikant reduziert werden. Die Erhöhung der Festigkeit der erfindungsgemäßen Bolzennabe beruht darauf, dass der radiale hydrodynamische Verdrängungsdruck als Beanspruchungskomponente im Nabenzenit entfällt und somit die Belastbarkeit der erfindungsgemäßen Bolzennabe signifikant steigt. Die Reduzierung der Bodenspannungen ist darauf zurückzuführen, dass eine Lastumverteilung in Umfangsrichtung des Kolbenbolzens erfolgt, die das Deformationsverhalten des Kolbenbolzens und damit die lokalen Dehnungen und Spannungen positiv beeinflusst. Zugleich ist gegenüber der im Stand der Technik beschriebenen mit einer Hochovalität versehenen Nabenbohrung eine verminderte Geräuschentwicklung während des Betriebs gegeben, das die grundsätzliche Nabenkontur (d.h. die Querschnittskontur der Nabenbohrung) unabhängig von der Form und Ausgestaltung der erfindungsgemäß vorgesehenen Tasche beliebig gewählt werden kann. Damit wird die Anpassung der Nabenkontur an die Anforderungen des Einzelfalls verbessert. Zusätzlich wirkt die erfindungsgemäß vorgesehene Tasche als Ölreservoir zur verbesserten Schmierung der Nabenbohrung. Somit können die erfindungsgemäß angestrebten Ziele mit geringem Aufwand erreicht werden.

Vorteilhafte Weiterbildungen ergeben sich aus den Unteransprüchen.

Die erfindungsgemäß vorgesehene Tasche erstreckt sich vorzugsweise über 50% bis 90%, insbesondere über 60% bis 80% der Länge der Bolzennabe. Damit ist ein zusätzlicher Spielraum zur individuellen Ausgestaltung der erfindungsgemäßen Bolzennabe gegeben, bspw. kann die Bolzennabe im Bereich der Nabenaußenfläche und/oder der Nabeninnenfläche eine Formbohrung aufweisen.

Die Breite der erfindungsgemäß vorgesehenen Tasche beträgt an der Nabeninnenfläche bspw. mindestens 20%, insbesondere 25% bis 40% des Durchmessers des Kolbenbolzens. Damit kann die Festigkeit der erfindungsgemäßen Bolzennabe weiter optimiert werden, bspw. auf über 120% der Festigkeit konventioneller Bolzennaben.

Die erfindungsgemäß vorgesehene Tasche kann zur Optimierung der Festigkeit der erfindungsgemäßen Bolzennabe in einer Variante so bemessen sein, dass an der Nabeninnenfläche die Endpunkte der Kante der erfindungsgemäß vorgesehenen Tasche einen Winkel von 30° bis 50°, bezogen auf die Mittelachse des Kolbenbolzens, einschließen.

Eine bevorzugte Ausführungsform der vorliegenden Erfindung sieht vor, dass die Querschnittskontur der Kante der erfindungsgemäß vorgesehenen Tasche die Form einer der Nabenbohrung überlagerten Ovalität aufweist. Dies bewirkt, dass die erfindungsgemäß vorgesehene Tasche bzw. ihr Rand mit einem weich verlaufenden kontinuierlichen Übergang in die Nabenbohrung übergeht. Damit wird die mechanische Belastung der Kante der Tasche im Betrieb reduziert und die Gefahr von Bolzen- oder Nabenreibem bzw. Bolzen- oder Nabenfressern vermieden.

Je nach den Anforderungen des Einzelfalls kann die Ovalität als eine positive oder negative Doppel-Ovalität, als eine Ovalität höherer Ordnung oder als eine lokale sinusförmige Formabweichung ausgebildet sein. In einer bevorzugten Weiterbildung nimmt der Ovaldurchmesser der überlagerten Ovalität in Richtung der Nabenaußenfläche stetig ab bzw. verläuft in einem stetig verringerten Umfangsbereich der Nabenbohrung, so dass auch bei dieser Ausführungsform ein zusätzlicher Spielraum zur individuellen Ausgestaltung der erfindungsgemäßen Bolzennabe gegeben ist.

Die erfindungsgemäß vorgesehene Tasche kann in eine zylindrische oder eine Querovalität aufweisende Bolzennabe eingebracht sein. Insbesondere bei der eine Querovalität aufweisenden Bolzennabe wird eine besonders hohe Nabenfestigkeit beobachtet.

Schließlich kann es von Vorteil sein, wenn in der Nabenbohrung eine wenigstens über einen Teil ihres Umfangs verlaufende Schmiemut vorgesehen ist, die in die erfindungsgemäß vorgesehene Tasche mündet, um deren Schmierwirkung weiter zu verbessern.

Ein Ausführungsbeispiel der vorliegenden Erfindung wird im Folgenden anhand der beigefügten Zeichnungen erläutert. Es zeigen in einer schematischen, nicht mäßstabsgetreuen Darstellung:
- Fig. 1: ein Ausführungsbeispiel eines mit erfindungsgemäßen Bolzennaben versehenen Kolbens, teilweise im Schnitt;
- Fig. 2: einen Schnitt entlang der Linie II - II in Figur 1;
- Fig. 3: einen Schnitt entlang der Linie III - III in Figur 1;
- Fig. 4: einen Schnitt entlang der Linie IV - IV in Figur 3, ausschnittsweise vergrößert dargestellt.

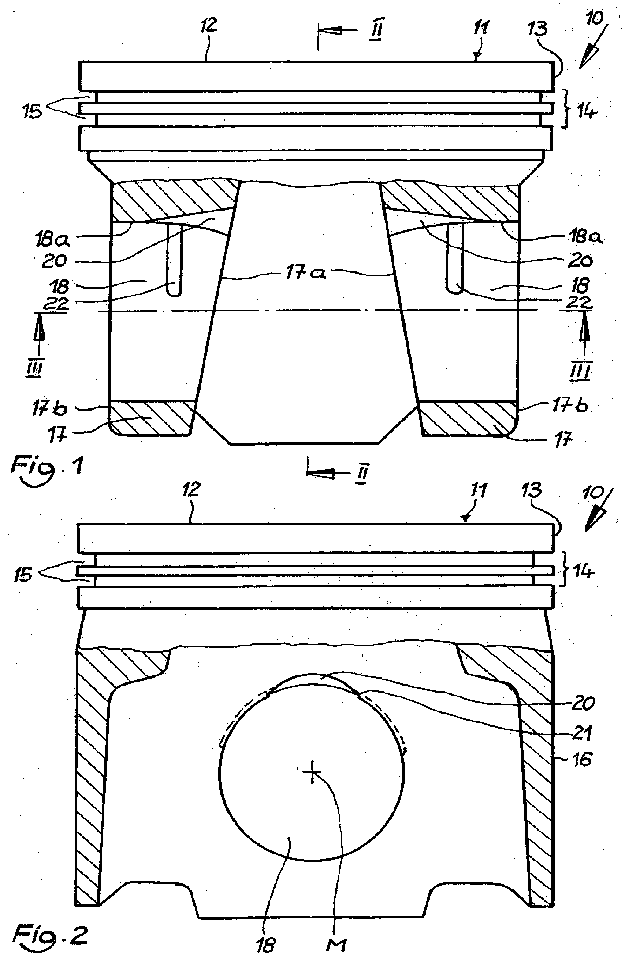

Die Figuren 1 und 2 zeigen einen im Ausführungsbeispiel einteiligen Kolben 10. Der Kolben 10 weist einen Kolbenkopf 11 mit einem Kolbenboden 12, einem umlaufenden Feuersteg 13 und einer umlaufenden Ringpartie 14 mit Ringnuten 15 für nicht dargestellte Kolbenringe auf. Unterhalb des Kolbenkopfes 11 sind ein Kolbenschaft 16 sowie Bolzennaben 17 mit jeweils eine Mantelfläche 18a aufweisenden Nabenbohrungen 18 zur Aufnahme eines Kolbenbolzens (nicht dargestellt) vorgesehen. Die Bolzennaben 17 weisen jeweils eine Nabeninnenfläche 17a und eine Nabenaußenfläche 17b auf.

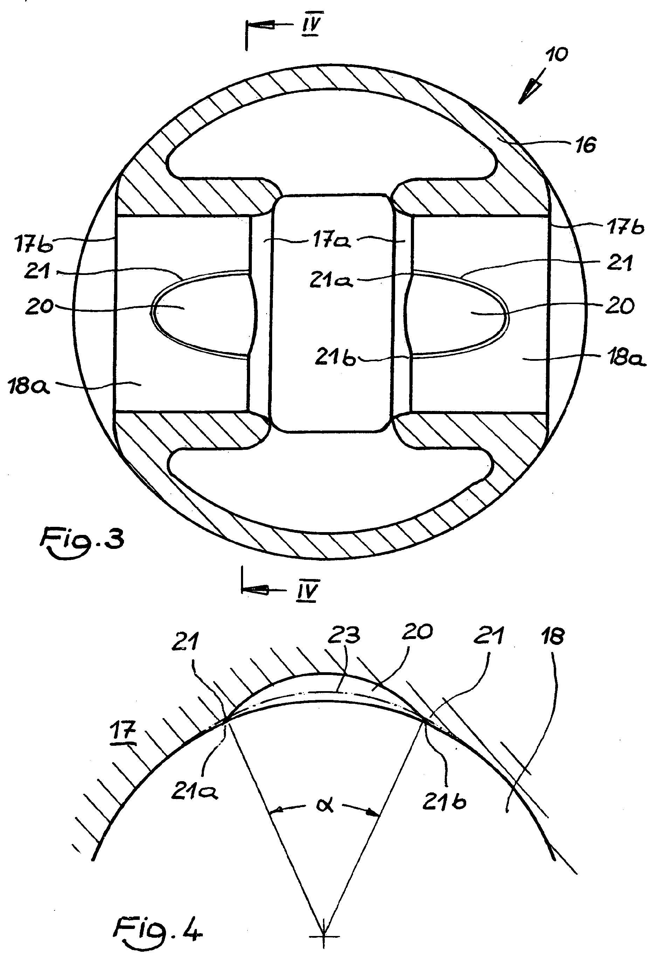

Die Bolzennaben 17 sind erfindungsgemäß derart ausgestaltet, dass die Nabenbohrungen 18 im Nabenzenit jeweils eine Tasche 20 aufweisen. Die Taschen 20 können bspw. mit einem Fräswerkzeug in die Nabenbohrungen 18 eingebracht sein. Jede Tasche 20 weist im Ausführungsbeispiel eine Querschnittskontur in Form eines Kreisbogens auf (vgl. Figur 4), dessen Tiefe in die bodenseitige Nabenoberfläche hinein entlang der Nabenkontur in Richtung der Nabenaußenfläche 17b stetig abnimmt. Mit anderen Worten: Die Tasche 20 wird in Richtung der Nabenaußenfläche 17b immer flacher, um schließlich in der Mantelfläche 18a der Nabenbohrung 18 auszulaufen. Wie in Figur 1 dargestellt ist, sind im Ausführungsbeispiel ferner Schmiernuten 22 in die Oberfläche der Nabenbohrungen 18 eingebracht, die wenigstens über einen Teil des Umfangs der Nabenbohrung 18 verlaufen. Die Schmiernuten 22 sind im Ausführungsbeispiel etwa im Nabenscheitel angeordnet und weisen bevorzugt eine Tiefe von 0,01 bis 1 mm auf. Die Schmiernuten 22 dienen zur weiteren Verbesserung der Ölverteilung sowie der Nabenschmierung.

Wie insbesondere aus Figur 3 ersichtlich ist, beträgt im Ausführungsbeispiel die Gesamtlänge der Tasche 20 etwa 80% der Länge der tragenden Nabenbohrung, so dass im Bereich der Nabenaußenfläche 17b die Möglichkeit besteht, eine Formbohrung mit beliebiger Ausgestaltung (nicht dargestellt) vorzusehen. Je nach den Anforderungen des Einzelfalls kann auch im Bereich der Nabeninnenseite 17a eine Formbohrung vorgesehen sein. Formbohrungen sind dem Fachmann als solche bekannt.

Insbesondere aus Figur 4 ist ersichtlich, dass die Endpunkte 21a, 21 b der Kante 21 der Tasche 20 an der Nabeninnenfläche 17a in Bezug auf die Mittelachse M des Kolbenbolzens einen Winkel α von im Ausführungsbeispiel etwa 45° einschließt. Der bevorzugte Öffnungswinkel α beträgt etwa 30° bis 50°.

Im dargestellten Ausführungsbeispiel ist, wie insbesondere aus den Figuren 3 und 4 ersichtlich, die umlaufende Kante 21 der Tasche 20 mit einer überlagerten Ovalität 23 versehen. Diese der Nabenbohrung 18 überlagerte Ovalität 23 dient dazu, die vom Kolbenbolzen ausgehenden Belastungen im Bereich der Tasche 20 zu reduzieren. Diese überlagerte Ovalität 23 kann insbesondere in an sich bekannter Weise die Querschnittskontur der Kante 21 der Tasche 20 im Sinne einer positiven oder negativen Doppel-Ovalität, einer Ovalität höherer Ordnung oder einer lokalen sinusförmigen Formabweichung überlagern. Die Berechnung derartiger Ovalitäten ist dem Fachmann an sich bekannt. Die beschriebene überlagerte Ovalität kann bspw. im Rahmen der Rundheitsbearbeitung der Nabenbohrung 18 eingebracht werden, insbesondere mittels einer 3D-gesteuerten Maschine.

Im Ausführungsbeispiel ist die Nabenbohrung 18 als rein zylindrische Nabenbohrung dargestellt (vgl. Figur 2). Die Nabenbohrung 18 kann aber in besonders vorteilhafter Weise eine an sich bekannte Querovalität zur Verbesserung der Nabenfestigkeit aufweisen. Alternativ oder zusätzlich hierzu kann die Nabenbohrung 18 außerhalb der Tasche 20, im Bereich der Nabenaußenfläche 17b und/oder im Bereich der Nabeninnenfläche 17a, eine hier nicht dargestellte Formbohrung beliebiger Art aufweisen.

## Patentansprüche

1. Bolzennabe (17) für einen Kolben (10) für einen Verbrennungsmotor, wobei die Bolzennabe (17) mit einer Nabeninnenfläche (17a) und einer Nabenaußenfläche (17b) sowie mit einer Nabenbohrung (18) zur Aufnahme eines Kolbenbolzens versehen ist, **dadurch gekennzeichnet, dass** die Nabenbohrung (18) im Nabenzenit eine Tasche (20) aufweist, deren Tiefe entlang der Nabenkontur in Richtung der Nabenaußenfläche (17b) stetig abnimmt und dass an der Nabeninnenfläche (17a) die Endpunkte (21 a, 21 b) der Kante (21) der Tasche (20) einen Winkel (α) von 30° bis 50°, bezogen auf die Mittelachse (M) des Kolbenbolzens, einschließen.

2. Bolzennabe nach Anspruch 1, **dadurch gekennzeichnet, dass** die Tasche sich über 50% bis 90% der Länge der Bolzennabe (17) erstreckt.

3. Bolzennabe nach Anspruch 2, **dadurch gekennzeichnet, dass** die Tasche (20) sich über 60% bis 80% der Länge der Bolzennabe (17) erstreckt.

4. Bolzennabe nach Anspruch 2 oder 3, **dadurch gekennzeichnet, dass** die Bolzennabe (17) im Bereich der Nabenaußenfläche (17b) und/oder im Bereich der Nabeninnenfläche (17a) eine Formbohrung aufweist.

5. Bolzennabe nach einem der vorhergehenden Ansprüche, **dadurch gekennzeichnet, dass** die Breite der Tasche (20) an der Nabeninnenfläche (17a) mindestens 20% des Durchmessers des Kolbenbolzens beträgt.

6. Bolzennabe nach Anspruch 5, **dadurch gekennzeichnet, dass** die Breite der Tasche (20) an der Nabeninnenfläche (17a) 25% bis 40% des Durchmessers des Kolbenbolzens beträgt.

7. Bolzennabe nach einem der vorhergehenden Ansprüche, **dadurch gekennzeichnet, dass** die Querschnittskontur der Kante (21) der Tasche (20) die Form einer der Nabenbohrung (18) überlagerten Ovalität (23) aufweist.

8. Bolzennabe nach Anspruch 8, **dadurch gekennzeichnet, dass** die Ovalität (23) als eine positive oder negative Doppel-Ovalität, als eine Ovalität höherer Ordnung oder als eine lokale sinusförmige Formabweichung ausgebildet ist.

9. Bolzennabe nach Anspruch 8 oder 9, **dadurch gekennzeichnet, dass** der Ovaldurchmesser der überlagerten Ovalität (23) in Richtung der Nabenaußenfläche (17b) stetig abnimmt.

10. Bolzennabe nach einem der Ansprüche 8 bis 10, **dadurch gekennzeichnet, dass** der Ovaldurchmesser der überlagerten Ovalität (23) in einem stetig verringerten Umfangsbereich der Nabenbohrung (18) verläuft.

11. Bolzennabe nach einem der vorhergehenden Ansprüche, **dadurch gekennzeichnet, dass** die Tasche (20) in eine zylindrische Bolzennabe (17) eingebracht ist.

12. Bolzennabe nach einem der Ansprüche 1 bis 11, **dadurch gekennzeichnet, dass** die Tasche (20) in eine eine Querovalität aufweisende Bolzennabe (17) eingebracht ist.

13. Bolzennaben nach einem der vorhergehenden Ansprüche, **dadurch gekennzeichnet, dass** in der Nabenbohrung (18) eine wenigstens über einen Teil ihres Umfangs verlaufende Schmiemut (22) vorgesehen ist, die in die Tasche (20) mündet.

14. Kolben (10) für einen Verbrennungsmotor, **dadurch gekennzeichnet, dass** er Bolzennaben (17) nach einem der Ansprüche 1 bis 14 aufweist.

## Claims

1. A piston pin boss (17) for a piston (10) for an internal combustion engine, wherein the piston pin boss (17) has an inner boss surface (17a) and an outer boss surface (17b) and a piston pin hole (18) to hold a piston pin, **characterized in that** the piston pin hole (18) has a pocket (20) in the boss in the direction toward the zenith, the depth of the pocket (20) steadily decreasing along the boss contour in the direction toward the outer boss surface (17b) and **in that** [the lines going from] the end points (21 a, 21b) of the edge (21) of the pocket (20) on the inner boss surface (17a) to the center axis (M) of the piston pin include an angle (α) of 30° to 50°.

2. The piston pin boss described in claim 1, **characterized in that** the pocket extends over 50% to 90% of the length of the piston pin boss (17).

3. The piston pin boss described in claim 2, **characterized in that** the pocket (20) extends over 60% to 80% of the length of the piston pin boss (17).

4. The piston pin boss described claim 2 or 3, **characterized in that** the piston pin boss (17) has a shaped hole in the area of the outer boss surface (17b) and/or in the area of the inner boss surface (17a).

5. The piston pin boss described in one of the preceding claims, **characterized in that** the width of the pocket (20) on the inner boss surface (17a) is at least 20% of the diameter of the piston pin.

6. The piston pin boss described in claim 5, **characterized in that** the width of the pocket (20) on the inner boss surface (17a) is 25% to 40% of the diameter of the piston pin.

7. The piston pin boss described in one of the preceding claims, **characterized in that** the contour of the cross section of the edge (21) of the pocket (20) has the shape of an ovality (23) superimposed on the piston pin hole (18).

8. The piston pin boss described in claim 8, **characterized in that** the ovality (23) is in the form of a positive or negative double ovality, a higher-order ovality, or a local sinusoidal deviation in shape.

9. The piston pin boss described in claim 8 or 9, **characterized in that** the oval diameter of the superimposed ovality (23) steadily decreases in the direction toward the outer boss surface (17b).

10. The piston pin boss described in one of claims 8 through 10, **characterized in that** the oval diameter of the superimposed ovality (23) runs in a steadily reduced peripheral area of the piston pin hole (18).

11. The piston pin boss described in one of the preceding claims, **characterized in that** the pocket (20) is made in a cylindrical piston pin boss (17).

12. The piston pin boss described in one of claims 1 through 11, **characterized in that** the pocket (20) is made in a piston pin boss (17) having a transverse ovality.

13. The piston pin boss described in one of the preceding claims, **characterized in that** the piston pin hole (18) has a lubrication groove (22) that runs over at least part of its periphery and that opens into the pocket (20).

14. A piston (10) for an internal combustion engine, **characterized in that** it has piston pin bosses (17) described in one of claims 1 through 13.

## Revendications

1. Bossage d'axe (17) pour un piston (10) pour un moteur à combustion interne, où le bossage d'axe (17) est pourvu d'une surface extérieure de bossage (17a) et d'une surface extérieure de bossage (17b), ainsi que d'un alésage de bossage (18) pour l'admission d'un axe de piston, **caractérisé en ce que** l'alésage de bossage (18) présente une poche (20) au point supérieur de bossage dont la profondeur diminue de manière continue le long du contour de bossage en direction de la surface extérieure de bossage (17b) et que, sur la surface intérieure de bossage (17a), les points terminaux (21 a, 21 b) de l'arête (21) de la poche (20) renferment un angle (α) de 30 ° à 50 ° par rapport à l'axe central (M) de l'axe de piston.

2. Bossage d'axe selon la revendication 1, **caractérisé en ce que** la poche s'étend sur 50 % à 90 % de la longueur du bossage d'axe (17).

3. Bossage d'axe selon la revendication 2, **caractérisé en ce que** la poche (20) s'étend sur 60 % à 80 % de la longueur du bossage d'axe (17).

4. Bossage d'axe selon les revendications 2 ou 3, **caractérisé en ce que** le bossage d'axe (17) présente un alésage de forme dans la zone de la surface extérieure de bossage (17b) et/ou dans la zone de la surface intérieure de bossage (17a).

5. Bossage d'axe selon l'une des revendications précédentes, **caractérisé en ce que** la largeur de la poche (20) au niveau de la surface intérieure de bossage (17a) correspond à au moins 20 % du diamètre de l'axe de piston.

6. Bossage d'axe selon la revendication 5, **caractérisé en ce que** la largeur de la poche (20) au niveau de la surface intérieure de bossage (17a) correspond à 25 % à 40 % du diamètre de l'axe de piston.

7. Bossage d'axe selon l'une des revendications précédentes, **caractérisé en ce que** le contour de la section transversale de l'arête (21) de la poche (20) présente la forme d'une ovalisation (23) superposée à l'alésage de bossage (18).

8. Bossage d'axe selon la revendication 7, **caractérisé en ce que** l'ovalisation (23) est conçue sous la forme d'une ovalisation double, positive ou négative, sous la forme d'une ovalisation d'ordre supérieur ou sous la forme d'une variante de forme locale de forme sinusoïdale.

9. Bossage d'axe selon les revendications 7 ou 8, **caractérisé en ce que** le diamètre ovale de l'ovalisation (23) superposée diminue de manière continue en direction de la surface extérieure de bossage (17b).

10. Bossage d'axe selon l'une des revendications 7 à 9, **caractérisé en ce que** le diamètre ovale de l'ovalisation (23) superposée s'étend dans une zone de contour de l'alésage de bossage (18) se rétrécissant de manière continue.

11. Bossage d'axe selon l'une des revendications précédentes, **caractérisé en ce que** la poche (20) est intégrée dans un bossage d'axe (17) cylindrique.

12. Bossage d'axe selon l'une des revendications 1 à 10, **caractérisé en ce que** la poche (20) est intégrée dans un bossage d'axe 17) présentant une ovalisation transversale.

13. Bossage d'axe selon l'une des revendications précédentes, **caractérisé en ce que**, dans l'alésage de bossage (18), au moins une rainure de lubrification (22) s'étendant sur une partie de son pourtour, qui débouche dans la poche (20), est prévue.

14. Piston (10) pour un moteur à combustion interne, **caractérisé en ce qu'**il présente des bossages d'axe (17) selon l'une des revendications 1 à 13.
